# EUROPÄISCHE PATENTANMELDUNG

(11) **EP 4 789 535 A1**
(43) Veröffentlichungstag der Anmeldung: **12.08.2026**
(21) Anmeldenummer: 26156572.5
(22) Anmeldetag: 05.02.2026
(51) Int. Cl.: A01K 25/00, G06T 7/50, G06V 20/64, G06V 40/10, B33Y 80/00, G01C 11/04

(54) **VERFAHREN ZUR AUSWAHL, HERSTELLUNG UND/ODER ANPASSUNG EINER GRUNDFORM EINES MAULKORBES**

(30) Priorität: 05.02.2025 DE 102025104293
(71) Anmelder: Evers, Wencke, 38104 Brauscnweig (DE)
(72) Erfinder: Evers, Wencke, 38104 Brauscnweig (DE)
(74) Vertreter: Gerstein, Hans Joachim

(57) **Zusammenfassung**

Ein Verfahren zur Anpassung einer Grundform eines Maulkorbes an den individuellen Kopf eines Hundes wird beschrieben mit den Schritten:
a) Automatisches Auswählen einer passenden Grundform des Maulkorbes aus einer abgespeicherten Menge unterschiedlicher Grundformen. Die passende Grundform wird mit einer trainierten Wissensdatenbank, die aus mehreren digitalen Bildern des Hundekopfes, der in mehreren voneinander unterschiedlichen Perspektiven aufgenommen und in den Bildern abgebildet ist, aus der abgespeicherten Menge von Grundformen ausgewählt.
b) Referenzieren der Abbildung des Hundekopfes in den mehreren digitalen Bildern auf einen realen Maßstab; und
c) automatisches Erstellen eines dreidimensionalen Datenmodells des Hundekopfes aus den auf den realen Maßstab referenzierten Abbildungen des Hundekopfes.

Es erfolgt ein Herstellen eines realen Modells des Hundekopfes mit dem dreidimensionalen Datenmodell des Hundekopfes sowie Anpassen der ausgewählten Grundform des Maulkorbes an dem hergestellten realen Modell. Alternativ erfolgt ein Herstellen des an den Hundekopf angepassten Maulkorbes anhand des dreidimensionalen Datenmodells.

## Beschreibung

Die Erfindung betrifft ein Verfahren zur Auswahl, Herstellung und/oder Anpassung einer Grundform eines Maulkorbes an den individuellen Kopf eines Hundes.

In vielen Ländern ist das Tragen eines Maulkorbs in bestimmten Situationen und für bestimmte Hunderassen verpflichtend. Die Regelungen hierzu sind nicht einheitlich und unterscheiden sich je nach Land, Bundesland oder sogar von Gemeinde zu Gemeinde. Sofern eine Maulkorbpflicht besteht, ist diese bindend, und Verstöße können mit Bußgeldern geahndet werden.

In öffentlichen Verkehrsmitteln wie Bussen und Bahnen ist ein Maulkorb immer dann verpflichtend, wenn der Hund nicht in einer Transportbox untergebracht ist. Dies liegt daran, dass im Nahverkehr viele Menschen auf engem Raum zusammenkommen und es hektisch zugehen kann. Ein Maulkorb dient hier der Sicherheit, falls der Hund aus Angst, Unsicherheit, Überforderung oder aus reinem Aggressionsverhalten heraus reagieren sollte. Dieses Risiko kann selbst bei gut sozialisierten Tieren nicht vollständig ausgeschlossen werden. Ebenso kann das Tragen eines Maulkorbs außerdem in stark frequentierten öffentlichen Bereichen wie Fußgängerzonen, Veranstaltungsorten oder öffentlichen Gebäuden vorgeschrieben sein.

Eine allgemeingütige Regelung zum Tragen eines Maulkorbs liegt in Deutschland nicht vor. Die einzelnen Bundesländer, teils sogar die Gemeinden, entscheiden über die entsprechenden Richtlinien.

Insbesondere sind jedoch Listenhunde, die in den jeweiligen Bundesländern auf der Liste geführt werden, von der Maulkorbpflicht betroffen.

Die Kategorisierung von Rassen als Listenhunde erfolgt in der Regel anhand von statistischen Daten zu Vorfällen mit Hundebissen. Ein Auszug von Hunderassen, die in bestimmten Bundesländern maulkorbpflichtig sind:
- American Staffordshire Terrier
- American Pitbull Terrier
- Bullterrier
- Staffordshire Bullterrier
- Rottweiler
- Tosa Inu.

Meist sind auch nicht reinrassige Hunde, also Mischlinge, von den entsprechenden Regelungen betroffen
Als gefährlich und damit maulkorbpflichtig können auch Hunde eingestuft werden, wenn sie bereits auffällig geworden sind oder ein gesteigertes Aggressionsverhalten an den Tag legen.

Halter von "gefährlichen Hunden" und "Hunden bestimmter Rassen", für die eine generelle Maulkorbpflicht gilt, können sich von selbiger befreien lassen, indem sie eine Ausnahmegenehmigung beantragen und den Nachweis einer medizinischen Indikation oder eines positiven Wesenstests vorlegen. Medizinische Indikation bedeutet, dass der Hund aufgrund einer Erkrankung einem besonderen Leidensdruck unterliegt, wenn er einen Maulkorb trägt. Das muss tierärztlich untersucht und attestiert werden. Voraussetzung für eine amtliche Befreiung ist, dass von dem Hund keine Gefahr ausgeht. Lässt sich das nicht eindeutig ausschließen, kann eine zusätzliche amtstierärztliche Bewertung erforderlich sein. Der Wesenstest wird üblicherweise mit dem Hund und mit dem Halter oder der Halterin persönlich durchgeführt. Das Tier muss in den allermeisten Fällen mindestens 15 Monate alt sein. Ein amtlicher Tierarzt oder eine anerkannte sachverständige Person prüfen das Tier auf bestimmte Verhaltenskriterien. Bei Bestehen des Tests wird ein positiver Bescheid ausgehändigt, der der Verwaltungsbehörde zur Beantragung der Ausnahmegenehmigung vorgelegt werden kann. Eine Ausnahmegenehmigung befreit den Hund aber nicht überall von der Maulkorbpflicht. An Standorten, an denen für alle Hunde Maulkorbzwang herrscht, müssen auch Tiere mit Ausnahmegenehmigung einen Maulkorb tragen.

Zeitgleich steigt die Anzahl von Hunden aus dem Ausland, die nach Deutschland importiert werden immer weiter an und wir haben immer mehr Hunde, die missverstanden, nicht ausreichend unterstützt und erzogen und damit "auffällig" werden.

Die Tierheime sind voll und Maulkörbe sind hier ein notwendiges Tool, um mit diesen Hunden überhaupt interagieren und arbeiten zu können.

Neben den Haltern von auffälligen Hunden, sollte zudem jeder Hundehalter einen Maulkorb Zuhause und den Hund an das Tragen eines solchen gewöhnt haben. Spätestens beim Tierarzt und wenn der Hund unter starken Schmerzen leidet, kann dieser sich unvorhergesehen Verhalten und im Zweifelsfall beißen. Zum Schutze aller ist auch in dieser Situation ein Maulkorb eine Notwendigkeit und der Hund sollte im besten Fall schon vorher an das Tragen gewöhnt worden sein.

Ein weiterer Grund zum Tragen eines Maulkorbs wird in der Gefahr ausgelegter Giftköder gesehen, die durch einen angepassten Drahtmaulkorb plus Fressschutz nahezu ausgeschlossen werden kann. Die angebotenen "Giftködernetze" sind nicht geeignet, da hierbei der Hund keine ausreichende Hechelmöglichkeit hat und dadurch keine artgerechte Nutzung möglich ist.

Die Hunderassen - differenziert nach dem Geschlecht und Alter und damit auch in der Rasse unterschiedlichen Körper- und Kopfgrößen - erfordern eine individuelle und den spezifischen Kopfformen angepasste Maulkorbform, die dem Zwecke des Maulkorbs gerecht wird und die Forderungen eines tiergerechten Tragens entspricht. Hierzu werden aktuell zahlreiche Grundformen von Metallmaulkörben durch einige nationale und internationale Unternehmen angeboten, die eine erste Einschätzung bzgl. Rasse und Größe ermöglichen. Diese Standardformen erfordern in den meisten Fällen eine Anpassung entsprechend der jeweiligen Kopfform und Größe, die bisher am lebenden Tier vorgenommen wird. Hierzu wird der vermeintlich passende Maulkorb dem Tier aufgesetzt und manuell durch Verbiegen des Korbes und Nachjustieren/Auswechseln eines Nasenpolsters, Halsriemens und zusätzlicher Anbringung des Kehlriemens eine optimale und hundegerechte Passform erzielt.

DE 1 976 851 U offenbart einen Maulkorb für Hunde, der aus einzelnen, mindestens teilweise miteinander verbundenen Riemen gebildet ist. Zur Anpassung sind die Riemen jeweils von einem flexiblen, endlos gefertigten und abgelängten Werkstoffband aus kunststoffbeschichtetem Gewebe gefertigt.

DD 15698 A5 offenbart einen Maulkorb für Hunde, der Tragriemen in miteinander verbundenen Seitenstücken, einem mit den Seitenstücken verbundenen Stirnband mit Führungen und hinten angesetzten Schlaufenstücken aufnimmt. Der Maulkorb ist mittels des Tragriemens auf verschiedene Größen einstellbar.

US 2015/257368 A1 beschreibt ein wärmeverformbares Halbzeug zur Anpassung eines Maulkorbes.

In KR 2022/0022209 A ist ein aufsteckbarer anpassbarer Maulkorb offenbart.

3D-Software. In: 3D-Medico. Bearbeitungsstand: 16. Januar 2025 11:20 UTC. URL: https://web.archive.org/web/20250116112049/https://2025.3d-medico.de/3d-software.html#content5-1u [abgerufen am 22.10.2025] offenbart eine KI gestützte online 3D-Orthesen-Software zur Herstellung individuell angepasster orthopädischer Hilfsmittel im 3D-Druck.

3D Büsten. In: youlittle. Bearbeitungsstand: 08. November 2024, 22:12 UTC. URL: https://web.archive.org/web/20241108221202/https://youlittle.com/3d-figuren/3d-busten/ [abgerufen am 22.10.2025] offenbart den 3D-Druck von menschlichen 3D-Büsten auf Basis eines 3D-Gesichtsscans.

Limuzz Basic. In: Limuzz. Bearbeitungsstand: 07. Dezember 2024, 00:08 UTC. URL: https://web.archive.org/web/20241207000806/https://limuzz.com/produkt/limuzzbasic/ [abgerufen am 22.10.2025] offenbart einen maßgefertigten Maulkorb für Hunde, der auf Basis der Angabe von Höhe, Länge, Umfang und Breite des geschlossenen Fangs individuell angefertigt wird.

Gesichtsschutzmasken im Sport. In: Sanitätshaus Manfred Klein. Bearbeitungsstand: 09. September 2024, 14:40 UTC. URL: https://web.archive.orq/web/20240909144011/ https://www.klein-sanitaetshaus.de/orthop% C3%A4die-technik/gesichtsschutzmaske/ [abgerufen am 22.10.2025] offenbart Gesichtsschutzmasken, die im 3D-Druckverfahren als Gesichtsschutz für Menschen im Sport individuell angepasst hergestellt werden

Das manuelle Anpassen erfordert viel Erfahrung, um bereits eine geeignete Auswahl eines Metallmaulkorbes mit einer passenden Grundform zu treffen. Hierfür kann auf eine große Anzahl von Grundformen durch zahlreiche Anbieter zurückgegriffen werden. Das Anpassen selber ist immer mit Risiken verbunden, da durch die ungewohnte Situation des ständigen Auf- und Absetzens und der zusätzlichen Anpassung durch den Berater im Beißbereich des Hundes, Verletzungen aufgrund von unvorhergesehenen Reaktionen des Hundes nicht ausgeschlossen werden können.

In der Regel muss eine Korrektur durchgeführt werden, da der Sitz einer Grundform nicht optimal für den Hund ist. Der Maulkorb ist zu schmal, zu breit, der Abstand zwischen Korb und Nase oder Augen ist zu kurz oder weit. Häufig kann sich der Hund den aufgesetzten und nicht angepassten Metallmaulkorb durch Kratzbewegungen vom Kopf ziehen, wodurch auch eine sichere Nutzung in der Öffentlichkeit nicht sichergestellt werden kann. Die Korrektur vor Ort, verbunden mit einem mehrmaligen An- und Ausziehen, kann dazu führen, dass das erstmalige Tragen eines Maulkorbes mit einer Negativerfahrung durch den Hund verbunden wird, was das Gewöhnen an diese Situation und das Anlegen des Korbes schwierig macht. Ein hoher fachlicher und zeitlicher Aufwand besteht darin, die richtigen Maße des Hundekopfes durch die Halterin/den Halter zu ermitteln, einen/eine Fachberater/in vor Ort zu finden und einen Termin incl. der notwendigen Fahrzeit für An- und Abfahrt abzustimmen: Für die Anpassung wird in der Regel eine Zeit von ca. 30 Minuten benötigt. Außerdem ist dann immer noch nicht sichergestellt, dass der passende Grundmaulkorb vor Ort verfügbar ist und eventuell weitere Terminabstimmungen notwendig sind.

Aufgabe der vorliegenden Erfindung ist es daher, ein verbessertes Verfahren zur Anpassung einer Grundform eines Maulkorbes an den individuellen Kopf eines Hundes zu schaffen.

Die Aufgabe wird mit dem Verfahren mit den Merkmalen des Anspruchs 1 gelöst. Vorteilhafte Ausführungsformen sind in den Unteransprüchen beschrieben.

Das Verfahren zur Anpassung einer Grundform eines Maulkorbes an den individuellen Kopf eines Hundes hat die Schritte:
a) Automatisches Auswählen einer oder mehrerer passender Grundformen des Maulkorbes aus einer abgespeicherten Menge unterschiedlicher Grundformen. Die passende Grundform wird mit einer trainierten Wissensdatenbank, die aus mehreren digitalen Bildern des Hundekopfes, der in mehreren voneinander unterschiedlichen Perspektiven aufgenommen und in den Bildern abgebildet ist, aus der abgespeicherten Menge von Grundformen ausgewählt.
b) Referenzieren der Abbildung des Hundekopfes in den mehreren digitalen Bildern auf einen realen Maßstab;
c) automatisches Erstellen eines dreidimensionalen Datenmodells des Hundekopfes aus den auf den realen Maßstab referenzierten Abbildungen des Hundekopfes;
   und
d1) Herstellen eines realen Modells des Hundekopfes mit dem dreidimensionalen Datenmodell des Hundekopfes sowie
d2) Anpassen der ausgewählten Grundform des Maulkorbes an dem hergestellten realen Modell.

Bisher existieren lediglich Empfehlungen für einen optimalen Metallmaulkorb, die sich aus den vorliegenden Maßangaben, Erfahrungen und Zuordnung zu den jeweiligen Hunderassen und Geschlecht als sinnvoll ergeben haben. Hierbei geben die verschiedenen Hersteller auf den Portalen Empfehlungen mit zusätzlichen Angaben bzgl. Größe etc. an, die als Richtlinie genommen werden können. Eine einheitliche Definition und daraus abzuleitende Größenangaben bzw. Empfehlungen zwischen den Anbietern existiert bislang nicht. Eine spezifische Anpassung ist ebenfalls nicht verfügbar, sondern muss immer individuell erfolgen.

Durch das erfindungsgemäße Verfahren kann unabhängig der Hunderassen und den verschiedenen Anbietern von Grundmodellen eine für den speziellen Hund optimale herstellerneutrale Auswahl getroffen werden, die einen möglichst geringen nachträglichen Anpassungsbedarf notwendig macht. Die automatisierte Anfertigung eines dreidimensionalen Modells des Hundekopfes erlaubt die Anpassung an diesem Modell und nicht am lebenden Hund. Damit ist die Anpassung einfacher, tierschutzgerechter und ungefährlicher. Zudem kann das Modell vom Nutzer später als Dekorations- und Erinnerungsstück aufgestellt werden.

Durch die Übertragung und Nutzung des Verfahrens über eine App auf einem Smartphone kann über eine entsprechende Lizensierung eine Skalierung der Anwendung erzielt werden, die selbstständig durch die Halterin / den Halter oder auch durch weitere Lizenznehmer (Firmen, Hundeketten, Plattformen, Organisationen, Hundeschulen etc.) durchgeführt werden kann.

Die Reihenfolge des Schrittes kann bedarfsweise variiert werden. So kann der Schritt b) vor dem Schritt a) durchgeführt werden.

Das Herstellen des realen Modells kann automatisch mit additiver Fertigung oder mit subtraktiver Fertigung erfolgen. Geeignet ist beispielsweise ein 3D-Druck, wie bspw. Selektives Laser-Sintern / -Schmelzen SLS/SLM, Schmelz-Schichtung FDM, Stereolithografie STL/SLA und dergleichen.

Es kann ein automatisches Identifizieren der Anpassungen der ausgewählten Grundform des Maulkorbes an den modellierten Hundekopf mit einem trainierten neuronalen Netzwerk erfolgen, das aus den mehreren digitalen Bildern des Hundekopfes, der in mehreren voneinander unterschiedlichen Perspektiven aufgenommen und in den Bildern abgebildet ist, und der abgespeicherten dreidimensionalen Form des ausgewählten Grundmodells die Anpassung der dreidimensionalen Form des ausgewählten Grundmodells an die in den digitalen Bildern abgebildete Form des Hundekopfes berechnet und zur Identifizierung ausgibt.

Hierzu können die eingegebenen digitalen Abbildungen des Hundekopfes auf einen realen Maßstab referenziert werden. Vorteilhaft ist es hierzu, in den Abbildungen zugleich einen Maßstab abzubilden. Denkbar ist aber auch eine Referenzierung von charakteristischen Bildpunkten und Bildmerkmalen zueinander, um daraus automatisiert den Maßstab zu ermitteln. Dies kann durch im Hintergrund abgebildete Gittermuster oder durch eine mehrfache Aufnahme aus unterschiedlichen Perspektiven mit bekannter optischer Ausrichtung der hierzu verwendeten mehreren Linsen zueinander erfolgen.

Die identifizierten Anpassungen können in mindestens einer Darstellung zur manuellen Anpassung der Grundform ausgegeben werden. Damit werden dem Nutzer in der Darstellung die zur Anpassung notwendigen Anweisungen gegeben. Der angepasste Maulkorb kann dann wiederum mit einer Kamera aufgenommen und die mehreren Abbildungen des angepassten Maulkorbes durch bildverarbeitende Logik auf das erstellte dreidimensionale Modell des Hundekopfes projiziert werden. Damit kann kontrolliert werden, ob die vorgenommen Anpassungen bestmöglich auf den Hundekopf abgestimmt sind.

Die identifizierten Anpassungen können in einer Datei ausgegeben und an eine Fertigungseinheit zur automatischen Anpassung der Grundform oder zur automatischen Herstellung der angepassten Grundform mit der Fertigungseinheit übertragen werden.

Es kann ein automatisches Extrahieren von charakteristischen Eigenschaften des Hundes mit einem trainierten Wissensmodell aus dem automatisch erstellten dreidimensionalen Datenmodell des Hundekopfes und eine Übertragung der charakteristischen Eigenschaften zusammen mit Daten des Hundehalters zur automatischen Abfrage eines Versicherungsangebots für den Hund erfolgen. Die durch die Aufnahmen mittels der Kl-Anwendung und der Referenzdatenbank automatisch extrahierten charakteristischen Merkmale des Hundes können zusammen mit Nutzerdaten mittels einer Softwareanwendung des Nutzers, welche die Durchführung und Übertragung bzw. Auswertung der Aufnahmen unterstützt, an einen externen Dienstleister übertragen werden, der hieraus automatisiert ein an den jeweiligen Hund und Nutzer angepasste Versicherungs-Vertragsangebote erstellt und dem Nutzer automatisiert übermittelt.

Das Verfahren kann mit einen Computerprogramm automatisch ausgeführt werden, wobei das Computerprogramm Befehle umfasst, die bewirken, dass ein Computer bei der Ausführung der Befehle veranlasst wird, die Verfahrensschritte a) bis c) auszuführen und das dreidimensionale Datenmodell des Hundekopfes zur Herstellung eines realen Modells des Hundekopfes im Schritt d1) für die Anpassung eines Grundmodells eines Maulkorbes oder im Schritt e) zur Herstellung eines angepassten Maulkorbes weiterzuleiten.

Die Erfindung wird nachfolgend anhand eines Ausführungsbeispiels mit den beigefügten Zeichnungen näher erläutert. Es zeigen:
- Fig. 1 -: Skizze des Verfahrens zur Anpassung einer Grundform von Maulkörben an den individuellen Kopf eines Hundes;
- Fig. 2 -: Flussdiagramm der Schritte a) bis e) des Verfahren.

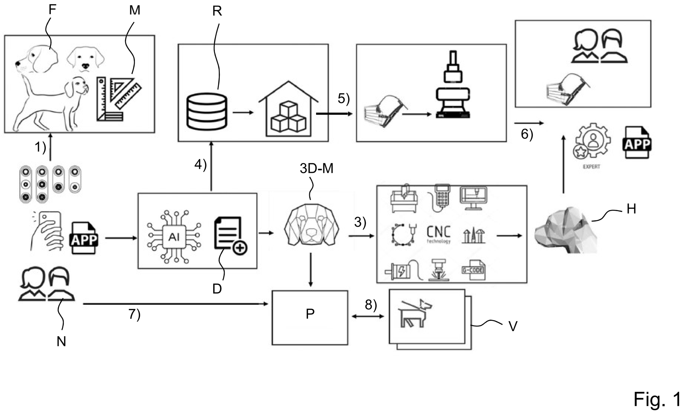

Figur 1 zeigt eine Skizze des Verfahrens zur Anpassung einer Grundform von Maulkörben an den individuellen Kopf eines Hundes.

In einem ersten Schritt 1) erfolgt in der Regel dezentral vom Hundehalter bzw. Nutzer N ein Erstellen eines oder mehrerer digitaler Fotos F und/oder Videos des Hundekopfes mit der Hundeschnauze in mehreren Perspektiven, insb. Seitenansicht, Draufsicht von oben, Frontansicht von vorn. Optional kann auch eine Aufnahme des Hundes als Gesamtbild bzw. als Video vorgenommen werden.

Zur Referenzierung der Fotos bzw. Videos auf einen realen Maßstab (Abmessungen, Länge, Breite, Höhe) kann eine parallele Aufnahme des Kopfes mit einem Maßstab M (Zollstock, Gittermuster im Hintergrund, Algorithmik durch Ausnutzen einer mehrlinsigen Aufnahme über ein entsprechendes Aufnahmegerät wie iPhone) erfolgen.

Die bspw. mit Hilfe einer Softwareapplikation APP aufgenommenen Fotos F bzw. Videos werden vom Nutzer oder seiner APP in einem Schritt 2) an einen zentralen Diensteserver übertragen, auf dem eine Kl-Anwendung Al ausgeführt wird. Die Kl-Anwendung AI ist eingerichtet, um automatisiert mit Hilfe eines trainierten bildgestützten Netzwerks bzw. Wissensmodell die Fotos F und/oder Videos zusammenzuführen und ein dreidimensionales Modell 3D-M des in den Fotos abgebildeten Hundekopfes zu erstellen.

Hierzu kann ein Entzerren der aufgenommenen Abbildungen des Hundekopfes und ein Kalibrieren der entzerrten Abbildungen durchgeführt werden. Mit einer solchen Rektifizierung lassen sich die aufgenommenen Bilder an eine vorgegebene Perspektive anpassen.

Für die Kl-Anwendung AI wird ein generatives neuronales Netz Al auf der Grundlage von vorhandenen Datensätzen von Bildern mit Hundeköpfen, die jeweils einem vordefinierten 3D-Datenmodell 3D-M des Hundekopfes zugeordnet sind, trainiert. Anhand der von Nutzer aufgenommenen Abbildungen des Hundekopfes und des trainierten neuronalen Netzes wird eine Datei D erstellt, die das 3D-Kopfmodell beschreibt. Das dreidimensionale Datenmodell 3D-M kann vom Nutzer manuell, teilautomatisch oder automatisch mit einem Computerprogramm, das auf einem Computer ausgeführt wird, bearbeitet bzw. mit der Datei erstellt werden. Die Datei hat hierzu ein mit dem Computerprogramm kompatibles Dateiformat eines 3D-Modells und ermöglicht eine virtuelle Darstellung ermöglicht.

Im Schritt 3) erfolgt aus der Datei D das Erstellen eines Hundekopf-Modells H durch eine Fräsmaschine aus einem Rohling -Material Gips, Holz, Metall oder Fertigung über einen 3D-Druck.

Die Anpassung eines Maulkorbes erfolgt im Schritt 4) unter Zugriff auf Daten einer angelegten umfassenden Referenzdatenbank R der existierenden Grundformen von Metallmaulkörben als Basis für ein automatisierte wissensbasierte Kl-Anwendung AI. Die Referenzdatenbank R kann kontinuierlich bspw. bei Neuerscheinungen ergänzt werden. In der Referenzdatenbank R können zusätzlich Referenzfotos bzw. Videos von vorbekannten Hundeköpfen für die verschiedenen Hunderassen enthalten sein.

Es erfolgt eine computergestützte automatische Analyse und Auswahl einer optimalen Grundform (beste Passform, geringste Abweichung Hundeschnauze, Grundform, Qualitätsmerkmale optimaler, hundegerechter Tragekomfort) für einen Maulkorb aus der Referenzdatenbank R unter Berücksichtigung der spezifischen Hundeschnauze aus den jeweiligen Aufnahmen F bzw. des mit Hilfe der KI-Anwendung daraus abgeleiteten dreidimensionalen Drahtmodells 3D-M.

Je nach Tragegrund (kurzfristiges Anlegen mit kompakter Anpassung oder langfristiges Tragen mit entsprechender Tiefe) kann eine zweite Option für eine Variante des Maulkorbes festgelegt werden.

Im Schritt 5) erfolgt eine automatische computergestützte Identifizierung der notwendigen manuellen Anpassungen der ausgewählten Grundform des Maulkorbes an den spezifischen Hundekopf bzw. die Hundeschnauze. Damit werden z.B. bei einem MetallMaulkorb die notwendigen Verbiegungen an spezifischen Punkten, Flächen, Differenzen und Kennzeichnung der Anpassungen in Ort, Umfang, Maß einer Datei mit einer Referenzierung zur errechneten Datei des 3D-Datemmodells vorgegeben und identifiziert. Die Anpassung des Maulkorbgrundmodells im Schritt 6) kann beispielsweise durch folgende Möglichkeiten erfolgen:
- manuelle Anpassung durch einen Menschen unter Nutzung der errechneten und ausgewiesenen Korrekturen;
- Einbringen und Fixierung des Maulkorbgrundmodells in eine mechanische Vorrichtung, die basierend auf der berechneten 3D-Datei D die identifizierten Nacharbeiten automatisch durchführt;
- Nutzung des erstellten Modells (Gips, Holz, 3D-Druck etc.) als Referenz für die Hundeschnauze und manuelle Anpassung durch einen Menschen der Maulkorbgrundform an das Modell;
- virtuelle Darstellung des Hundekopfes/Schnauze und eines ausgesuchten Grundmodells als Vorgabe einer manuellen Anpassung durch einen Menschen;
- Analyse und Soll-Ist-Vergleich der aktuellen manuellen Anpassungen während des Prozesses und dynamische Anzeige des erzielten Ergebnisses über ein bildgebendes Verfahren durch eine wiederholte oder kontinuierliche Foto- bzw. Videoaufnahme des modifizierten Maulkorbes - auch in mehreren Bearbeitungsphasen.

Die Aufnahmen des Hundekopfes, der Schnauze und des Hundes können über eine App und ein Smartphone erfolgen, wobei neben den Fotos auch Ort und Zeit der Aufnahme hinterlegt werden.

Die Auswertung und Berechnung der 3D-Dateien D sowie die sich daraus ableitenden Ergebnisse können sowohl über einen cloudbasierten Algorithmus als auch im Smartphone selber durch entsprechende Algorithmen erfolgen.

Die Applikation kann neben den beschriebenen Prozessen auch im Schritt 7) die Kopplung mit weiteren Anwendungen P ermöglichen. Hierzu zählen:
- Übertragung und Speicherung der Kontaktdaten des Hundehalters bzw. Besitzers;
- Konfiguration eines Kunden-/Auftraggeber-Prozesses zur Bestellung, Bezahlung und Abrechnung einer entsprechenden Dienstleistung;
- weitere Serviceleistungen in Verbindung mit der Maulkorbanpassung wie Versicherung/Haftpflicht für Hunde/Welpen, die basierend auf der Nutzung eines optimal angepassten Metallmaulkorbes auf der Grundlage des erstellten dreidimensionalen Datenmodells 3D-M bzw. von charakteristischen Merkmalen der damit ausgewählten Grundform eines Maulkorbes bzw. der damit zusammenhängenden Eigenschaften einen besonderen Tarif angeboten bekommen. Hierzu können im optionalen Schritt 8) automatisch computergestützt (ggf. mit einer wissensbasierten Datenbank oder einem trainierten neuronalen Netz) Vertragsangebote V anhand der übertragenen Kontaktdaten und von mittels der Kl-Anwendung AI ermittelten charakteristischen Merkmale des Hundes sowie ggf. eingegebener Daten zu dem Hund erstellt und an den Nutzer N übertragen werden.

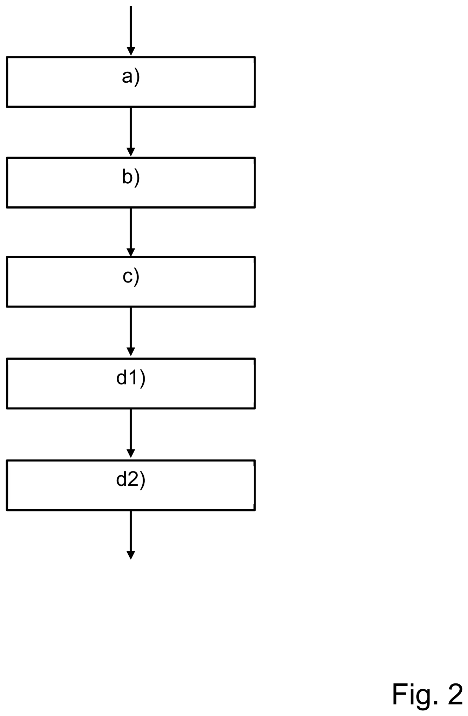

Figur 2 zeigt ein Flussdiagramm des Verfahrens zur Anpassung einer Grundform eines Maulkorbes an den individuellen Kopf eines Hundes mit den Schritten:
a) Automatisches Auswählen einer passenden Grundform des Maulkorbes aus einer abgespeicherten Menge unterschiedlicher Grundformen mit einer trainierten Wissensdatenbank, die aus mehreren digitalen Bildern des Hundekopfes, der in mehreren voneinander unterschiedlichen Perspektiven aufgenommen und in den Bildern abgebildet ist, die passende Grundform aus der abgespeicherten Menge von Grundformen auswählt;
b) Referenzieren der Abbildung des Hundekopfes in den mehreren digitalen Bildern auf einen realen Maßstab;
c) automatisches Erstellen eines dreidimensionalen Datenmodells des Hundekopfes aus den auf den realen Maßstab referenzierten Abbildungen des Hundekopfes;
   und
d1) Herstellen eines realen Modells des Hundekopfes mit dem dreidimensionalen Datenmodell des Hundekopfes sowie
d2) Anpassen der ausgewählten Grundform des Maulkorbes an dem hergestellten realen Modell.

Die Schrittfolge kann variieren. So kann beispielsweise das Referenzieren der Abbildung des Hundekopfes im Schritt b) vor dem automatischen Auswählen der passenden Grundform des Maulkorbes erfolgen.

## Patentansprüche

1. Verfahren zur Anpassung einer Grundform eines Maulkorbes an den individuellen Kopf eines Hundes mit den Schritten:
a) Automatisches Auswählen einer passenden Grundform des Maulkorbes aus einer abgespeicherten Menge unterschiedlicher Grundformen. Die passende Grundform wird mit einer trainierten Wissensdatenbank, die aus mehreren digitalen Bildern des Hundekopfes, der in mehreren voneinander unterschiedlichen Perspektiven aufgenommen und in den Bildern abgebildet ist, aus der abgespeicherten Menge von Grundformen ausgewählt.
b) Referenzieren der Abbildung des Hundekopfes in den mehreren digitalen Bildern auf einen realen Maßstab;
c) automatisches Erstellen eines dreidimensionalen Datenmodells des Hundekopfes aus den auf den realen Maßstab referenzierten Abbildungen des Hundekopfes;
und
d1) Herstellen eines realen Modells des Hundekopfes mit dem dreidimensionalen Datenmodell des Hundekopfes sowie
d2) Anpassen der ausgewählten Grundform des Maulkorbes an dem hergestellten realen Modell.

2. Verfahren nach Anspruch 1, **dadurch gekennzeichnet, dass** der Schritt b) vor dem Schritt a) durchgeführt wird.

3. Verfahren nach Anspruch 1 oder 2, **dadurch gekennzeichnet, dass** das Herstellen des realen Modells automatisch mit additiver Fertigung oder mit subtraktiver Fertigung erfolgt.

4. Verfahren nach einem der Ansprüche 1 bis 3, **gekennzeichnet durch** automatisches Identifizieren der Anpassungen der ausgewählten Grundform des Maulkorbes an den modellierten Hundekopf mit einem trainierten neuronalen Netzwerk, das aus den mehreren digitalen Bildern des Hundekopfes, der in mehreren voneinander unterschiedlichen Perspektiven aufgenommen und in den Bildern abgebildet ist, und der abgespeicherten dreidimensionalen Form der ausgewählten Grundform die zur Anpassung der dreidimensionalen Form der ausgewählten Grundform an die in den digitalen Bildern abgebildete Form des Hundekopfes berechnet und zur Identifizierung ausgibt.

5. Verfahren nach Anspruch 4, **dadurch gekennzeichnet, dass** die identifizierten Anpassungen in mindestens einer Darstellung zur manuellen Anpassung der Grundform ausgegeben werden.

6. Verfahren nach Anspruch 4, **dadurch gekennzeichnet, dass** die identifizierten Anpassungen in einer Datei ausgegeben und an eine Fertigungseinheit zur automatischen Anpassung der ausgewählten Grundform des Maulkorbes oder zur automatischen Herstellung des angepassten Maulkorbes mit der Fertigungseinheit übertragen wird.

7. Computerprogramm, umfassend Befehle, die bewirken, die bei der Ausführung durch einen Computer diesen veranlassen, die Verfahrensschritte a) bis c) nach Anspruch 1 auszuführen und das dreidimensionale Datenmodell des Hundekopfes zur Herstellung eines realen Modells des Hundekopfes im Schritt d1) oder im Schritt e) zur Herstellung eines angepassten Maulkorbes weiterzuleiten.
